# EUROPEAN PATENT SPECIFICATION

(11) **EP 1 870 318 B1**
(45) Date of publication and mention of the grant of the patent: **17.12.2008**
(21) Application number: 06115824.2
(22) Date of filing: 21.06.2006
(51) Int. Cl.: B62D 25/00

(54) **Vehicle pillar and vehicle**
Säule für Kraftfahrzeuge und Kraftfahrzeuge
Pilier de véhicule et véhicule

(43) Date of publication of application: 26.12.2007
(73) Proprietor: Ford Global Technologies, LLC, Dearborn, MI 48126 (US)
(72) Inventor: Lassl, Gunnar, Bohus 445 34 (SE)
(74) Representative: Valea AB

(56) References cited:
- US-A1- 2002 089 215
- US-B1- 6 679 544

## Description

### TECHNICAL FIELD

The present invention concerns a pillar for a vehicle, i.e. a load-bearing structural member such as a plate, sheet, rod or tube, wherein the pillar is disposed between a lower body portion of the vehicle and a roof of a vehicle in the case of a hardtop vehicle, such as a sedan, or where the roof would normally be in the case of an open-top vehicle, such as a cabriolet. The present invention also concerns a vehicle comprising such a pillar.

### BACKGROUND OF THE INVENTION

The passenger compartment of a vehicle requires high rigidity to protect the users of the vehicle from being injured in case of crash situations like rollover, i.e. an accident in which the vehicle overturns. Accordingly, the A-pillars of vehicles need to be strong and structurally rigid. A-pillars are generally designed to be of a hollow, closed cross section so as to limit their weight and consequently to make a vehicle in which they are mounted more lightweight. In order to increase the rigidity of such A-pillars, their cross sectional area may be enlarged. This is however disadvantageous in that a vehicle user's field of vision becomes narrower as the cross sectional area of the A-pillars becomes larger. A wide A-pillar causes blind spots in a vehicle driver's field of view and thereby decreases the safety of that vehicle's users and the safety of other road users.

US patent no. 6428087, in accordance with the preamble features of claim 1, discloses an A-pillar structure that comprises a plurality of openings which extend from the interior surface to the exterior surface of the A-pillar. Each of the plurality of openings is oriented towards a driver's eyes, such that a driver can see through one or more of the plurality of openings when positioned in a vehicle seat. Said A-pillar structure also comprises a web structure separating adjacent openings to provide the A-pillar with structural rigidity and it is designed to maximise the strength and stiffness of the A-pillar structure.

The A-pillar structure is manufactured as an aluminium forging or thin wall casting using a high ductility alloy. The aluminium A-pillar is formed contiguous with a cantrail structure. This structural component comprised of the A-pillar and the cantrail form a joint-free span between a cowl and a B-pillar. In the event of a rollover accident, rollover forces are typically directed at the front corner of the roof of a vehicle. These forces are thus applied at the middle of the structural component constituted by the A-pillar and the cantrail, which has no intervening joints. The upper end of said structural component will therefore be subjected to high bending moments. This problem is overcome by configuring the structural component to have a larger cross section in the regions where the highest bending moments occur, consequently increasing the cost, weight and complexity of said structural component.

### SUMMARY OF THE INVENTION

An object of the present invention is to provide a simplified vehicle pillar with desirable characteristics in crash situations like impact or rollover.

This object is achieved by a pillar that is disposed between a lower body portion of the vehicle and a roof of a vehicle in the case of a hardtop vehicle, such as a sedan, or where the roof would normally be in the case of an open-top vehicle, such as a cabriolet. The pillar comprises a region of reduced material thickness which constitutes a buckling initiator. When the pillar is subjected to a force, such as a rollover or impact force in a crash situation, said pillar will initially buckle around said buckling initiator i.e. said region of reduced material thickness will absorb part of the crash energy to plastically deform or buckle the pillar around said region of reduced material thickness.

The bending moment at the pillar's fulcrum or pivot point, i.e. the support about which the pillar has a tendency to turn when subjected to a force such as a rollover force, is thereby decreased since part of the energy that would have caused bending of the pillar is used to buckle part of the pillar. Such a pillar therefore exhibits improved rollover resistance and crash stability. Providing a pillar with a region of reduced material thickness also decreases its weight, which consequently makes the vehicle in which the pillar is mounted more lightweight and thus more fuel efficient. Furthermore, all of these aforementioned advantages are achieved without having to increase the cross sectional area of the pillar and thus without detriment to a vehicle user's field of view.

The pillar may be a substantially flat or curved plate or sheet of material or a straight or curved rod or tube of any uniform or non-uniform, substantially closed or open cross section or thickness which is mounted vertically or non-vertically in a vehicle. The expression "region of reduced material thickness" is intended to mean that the thickness of said region is less than the thickness of an adjacent or surrounding region or is zero, whereby said at least one region of reduced material thickness is an opening.

According to an embodiment of the invention the pillar comprises a plurality of regions of reduced material thickness constituting a plurality of buckling initiators, whereby said pillar will buckle around each buckling initiator sequentially, for example from the uppermost region of reduced material thickness to the lowermost. Buckling of the pillar is therefore controlled and progressive. Said sequential buckling will occur at the buckling initiators one, or several, at a time depending on the area of application of the force and the location of said buckling initiators. Said plurality of buckling initiators may be spaced any suitable distance apart.

According to another embodiment of the invention the pillar has an upper and a lower half, when mounted in a vehicle, whereby said at least one region of reduced material thickness (i.e. the single region of reduced material thickness or the plurality of such regions) is located in the upper half of the pillar or in both the upper and lower halves of the pillar, i.e. a plurality of said regions of reduced material thickness may be uniformly or non-uniformly distributed along the length of the pillar in the upper half of the pillar only, or in both the lower and upper half of the pillar.

According to an embodiment of the invention the pillar comprises a substantially hollow body, such as a pipe, of any substantially closed, uniform or non-uniform cross section, such as a circular or polygonal cross section. According to another embodiment of the invention the thickness of substantially hollow body is between 2-8 mm, preferably between 3-6 mm. According to a further embodiment of the invention the thickness of the pillar, when not in the form of a substantially hollow body is between 2-5 mm.

According to an embodiment of the invention the pillar constitutes the A-pillar of a vehicle. The present invention is however also applicable to a B-pillar, C-pillar etc, whereby an A-pillar is the shaft of material that supports the windscreen on either of the windscreen frame sides of a vehicle; each successive vertical support being denoted by a successive letter in the alphabet (B-pillar, C-pillar etc.).

According to another embodiment of the invention said at least one region of reduced material thickness is substantially triangular to maximise strength and stiffness. However, said regions of reduced material thickness may be of any suitable shape.

According to a further embodiment of the invention said at least one region of reduced material thickness has a transverse dimension of 30-50 mm.

According to an embodiment of the invention the pillar is manufactured from a metal or alloy, such as steel, stainless steel or aluminium or a laminated and/or reinforced composite material.

According to a further embodiment of the invention the pillar is manufactured by bending, stretch bending or hydroforming. Hydroforming is a specialized type of die forming that uses a high pressure hydraulic fluid to press room temperature working material into a die. The working material, usually metal, might be in the form of a tube, with the high pressure fluid inside the tube and the die outside the tube, or a sheet, with the fluid on one side and the die on the other. Hydroforming allows complex shapes with concavities to be formed, which would be difficult or impossible with standard solid die stamping. Hydroformed parts can often be made with a higher stiffness to weight ratio and at a lower unit-cost than traditional stamped and welded parts. Hydroforming produces stronger, lighter, and more rigid uni-body structures for vehicles.

According to an embodiment of the invention said at least one region of reduced material thickness is formed by water cutting, milling or laser cutting.

According to another embodiment of the invention the ratio of the cross sectional area of the pillar to the cross sectional area of a region of reduced material thickness is 2:1 to 5:1.

According to a further embodiment of the invention the ratio of the length of the pillar to the cross sectional area of a region of reduced material thickness is 10:1 to 30:1.

According to an embodiment of the invention the ratio of the average thickness of the pillar to the cross sectional area of an un-open region of reduced material thickness is 3:1 to 10:1.

According to another embodiment of the invention the pillar has a length of 1-2 metres and comprises three buckling initiators located in the upper half of the pillar when the pillar is mounted in a vehicle.

According to a further embodiment of the invention the pillar has an interior surface directed towards the interior of the passenger compartment when mounted in a vehicle and an exterior surface directed towards the exterior of the passenger compartment when mounted in a vehicle. At least one opening extends from the interior surface to the exterior surface of the pillar, where said interior and exterior surfaces are defined with respect to the interior and the exterior of the vehicle in which the pillar is mounted.

According to an embodiment of the invention said at least one opening is arranged to allow light to be transmitted through the vehicle body structure and/or oriented so that, when the pillar is mounted in a vehicle, a user of the vehicle can have a clear line of sight through the pillar or so as to better illuminate part of the inside of the vehicle, such as the instrument panel. According to another embodiment of the invention the pillar comprises an at least partly transparent element, such as glass or plastic, which is arranged to at least partly cover said at least one opening. Alternatively an opaque element could be used to cover said at least one opening if visibility through the pillar is not desired.

According to another embodiment of the invention the pillar comprises at least one energy absorbing member, i.e. a structural member that is arranged to collapse in a predictable manner in an impact situation, such as a hydroformed tube or beam, attached to the interior surface of the pillar.

### BRIEF DESCRIPTION OF THE DRAWINGS

The present invention will hereinafter be further explained by means of non-limiting examples with reference to the appended figures where;
- Figure 1: shows a cabriolet having a conventional A-pillar,
- Figure 2: shows an A-pillar according to an embodiment of the invention,
- Figure 3: schematically shows a conventional A-pillar structure and the direction of a rollover force applied thereto,
- Figure 4: depicts A-pillar structure according to an embodiment of the invention and the direction of a rollover force applied thereto, and
- Figure 5: shows a power curve for a conventional A-pillar and an A-pillar according to an embodiment of the invention.
- Figure 6: shows a pillar according to an embodiment of the invention viewed from inside the passenger compartment of a vehicle,
- Figure 7: shows the cross section of a pillar according to an embodiment of the invention,

It should be noted that the drawings have not been drawn to scale and that the dimensions of certain features have been exaggerated for the sake of clarity.

### DETAILED DESCRIPTION OF EMBODIMENTS

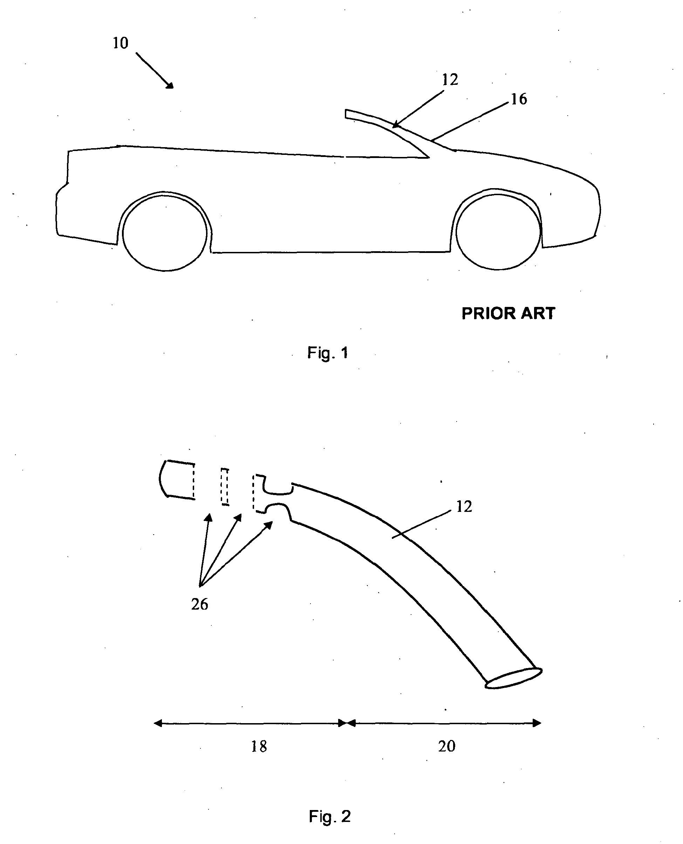

Figure 1 shows a passenger car 10, namely a cabriolet, i.e. a convertible coupe having a top that may be lowered or removed, comprising a conventional A-pillar 12 that supports the windscreen 16. The present invention is however also applicable to a sedan having a permanent top.

Figure 2 shows an A-pillar 12 comprising three regions of reduced material thickness, constituting buckling initiators 26, in this case two openings and a region whose thickness is less than the average thickness of the A-pillar. When the pillar 12 is subjected to a force, such as a rollover or impact force in a crash situation, it will buckle around the buckling initiators 26 sequentially; for example from the uppermost region of reduced material thickness to the lowermost. The pillar has an upper half 18 and a lower half 20 when mounted in a vehicle 10 and in the exemplified embodiment all of the openings 26 are located in the upper half 18 of the pillar 12.

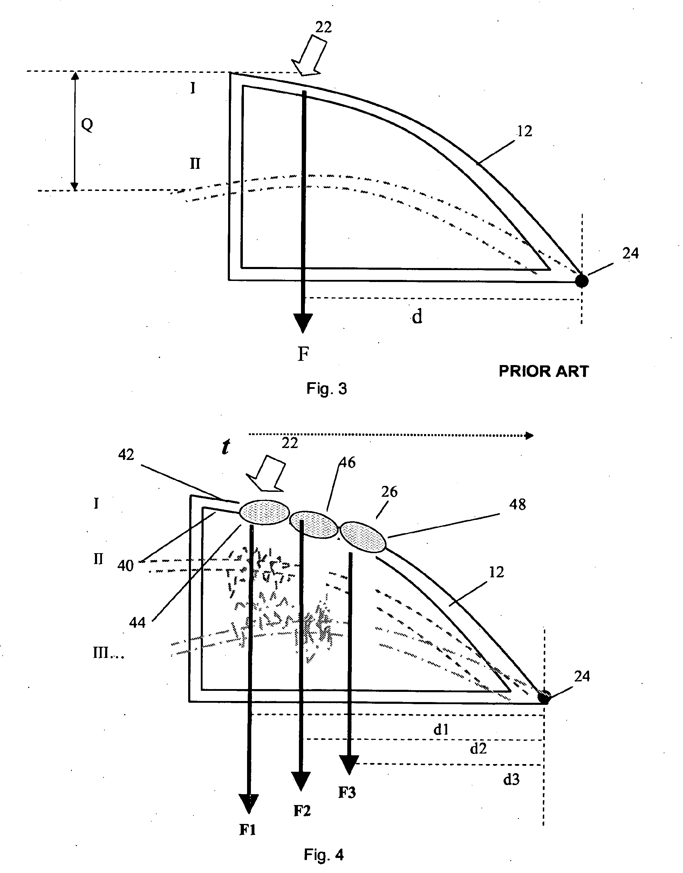

With reference to figure 3, in the event of a vehicle 10 having a rollover accident, a rollover force 22 is typically directed at the front corner of the roof of the vehicle 10 and this force will thus be applied to the A-pillar 12. The bending moment about fulcrum 24 will be (F x d) and will cause the A-pillar 12 to be bent from position I to position II through a deformation of Q mm.

Figure 4 shows the bending moments (F1 x d1), (F2 x d2) and (F3 x d3) that act on an A-pillar 12 according to an embodiment of the invention during time, t, in a crash situation like rollover. The A-pillar 12 has an interior surface 40 and an exterior surface 42 and comprises three openings 26 in its upper half which extend from the interior surface 40 to the exterior surface 42 thereof.

In the event of a vehicle 10 having a rollover accident, a rollover force 22 will act on the A-pillar 12. If the magnitude of the force 22 is less than a critical value there will be no bending but if the force 22 is greater than said critical value the A-pillar 12 will start to bend. However, the inventive A-pillar 12 is constructed so that it will buckle at certain points progressively, namely in the regions around the openings 26, rather than just keep bending, contrary to conventional pillars.

A rollover force 22 will subject the A-pillar 12 to stresses over its cross section, the highest stress occurring around the opening 26 furthest from the A-pillar's fulcrum 24 i.e. the opening 26 that is uppermost in the upper half of the A-pillar. A bending moment (F1 x d1) will act around the fulcrum 24 and the A-pillar 12 bends until the force 22 causes a first part 44 of the A-pillar 12 to buckle. A bending moment (F2 x d2) will then act around the fulcrum until the force 22 causes a second part 46 around the adjacent opening of the A-pillar 12 to buckle; the magnitude of F2 being less than the magnitude of F1 since energy has been absorbed in plastically deforming the part 44. Once second part 46 has buckled a bending moment (F3 x d3) will act around the fulcrum until the force 22 causes a third part 48 around the adjacent of the A-pillar 12 to buckle: the magnitude of F3 being less than the magnitude of F2 since energy has been absorbed in plastically deforming the second part 46. The A-pillar 12 therefore buckles progressively, i.e. buckling occurs sequentially in the regions around each buckling initiator from the uppermost buckling initiator to the lowermost. Due to crash energy being absorbed to buckle the A-pillar 12, the A-pillar will not be bent as much as a conventional pillar.

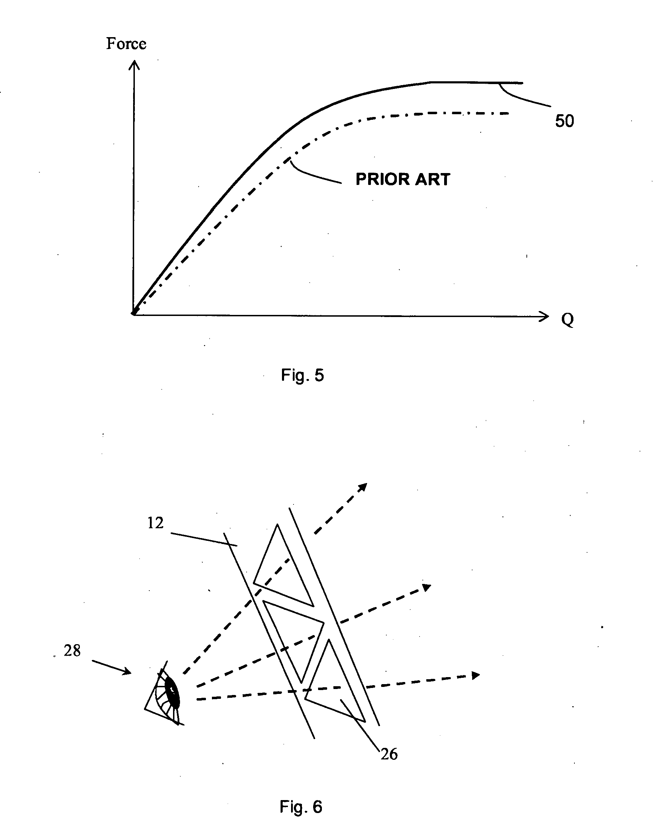

It has been found that an inventive pillar (power curve 50 in figure 5) can withstand a much greater applied load than a conventional pillar (prior art power curve in figure 5) and it can withstand twice the required legal load (i.e. an applied load of 1.5 times the vehicle mass without deforming more than 125 mm). An inventive pillar is therefore able to provide occupants of a vehicle with a higher degree of protection from being injured when the vehicle is subjected to a crash situation.

Figure 6 shows an A-pillar 12 according to an embodiment of the invention comprising a plurality of openings 26. The openings 26 are arranged to allow light to be transmitted through the A-pillar 12 and are oriented so that, when the A-pillar 12 is mounted in a vehicle, a user 28 of the vehicle can have a clear line of sight through the A-pillar 12.

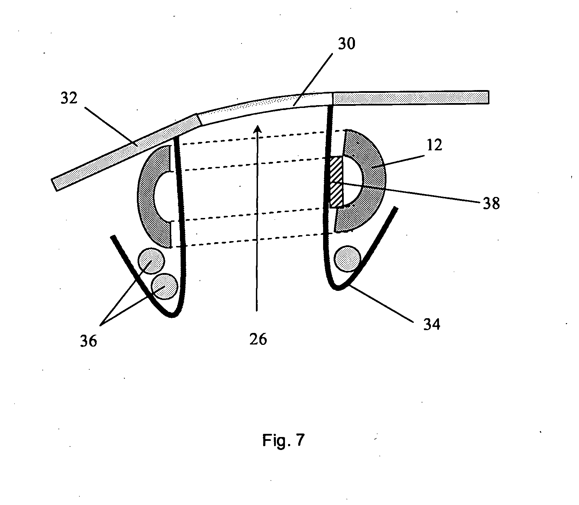

Figure 7 shows an A-pillar 12 with a race-track-shaped cross section which, in the exemplified embodiment, is a hydroformed pipe, mounted in a vehicle. The A-pillar 12 comprises an opening 26. An at least partly transparent element 30 comprising transparent, translucent, tinted or patterned glass or plastic is arranged to at least partially cover the opening 26. Alternatively the opening 26 could be covered by extending the vehicle's painted body panels 32 over the opening 26 if visibility through that part of the A-pillar is not desired. Figure 7 shows that an interior panel or trim 34 can be fitted or wrapped around the inside of the opening 26 to cover the A-pillar 12. The interior panel 34 may also be used to cover vehicle components, such as cables 36 for the interior lighting, for aesthetic and/or safety reasons. The exemplified A-pillar 12 also comprises an energy absorbing member 38.

## Claims

1. Pillar (12) for a vehicle (10), wherein the pillar (12) is disposed between a lower body portion of the vehicle and a roof of a vehicle (10), which comprises a region of reduced material thickness (26), **characterized in that** said region of reduced material thickness (26) constitutes a buckling initiator such that, when the pillar (12) is subjected to a force (22), such as a rollover force in a crash situation, said pillar (12) will initially buckle around said buckling initiator (26).

2. Pillar (12) according to claim 1, **characterized in that** it comprises a plurality of regions of reduced material thickness (26) constituting a plurality of buckling initiators (26), whereby said pillar (12) will buckle around each buckling initiator (26) sequentially; for example from the uppermost region of reduced material thickness to the lowermost.

3. Pillar (12) according to claim 1 or 2, **characterized in that** it has an upper and a lower half (20) when mounted in a vehicle (10), whereby said at least one region of reduced material thickness (26) is located in the upper half (18) of the pillar (12) or in both the upper and lower halves of the pillar (12).

4. Pillar (12) according to any of the preceding claims, **characterized in that** said at least one region of reduced material thickness (26) is an opening.

5. Pillar (12) according to claim 4, **characterized in that** it has an interior surface (40) directed towards the interior of the passenger compartment when mounted in a vehicle (10) and an exterior surface (42) directed towards the exterior of the passenger compartment when mounted in a vehicle (10) and said at least one opening extends from the interior surface (40) to the exterior surface (40) of the pillar (12).

6. Pillar (12) according to any of the preceding claims, **characterized in that** it comprises a substantially hollow body, such as a pipe, of any substantially closed, uniform or non-uniform cross section, such as a circular or polygonal cross section.

7. Pillar (12) according to any of the preceding claims, **characterized in that** it constitutes the A-pillar, B-pillar, C-pillar etc. of a vehicle (10).

8. Pillar (12) according to any of the preceding claims, **characterized in that** said at least one region of reduced material thickness (26) is substantially triangular.

9. Pillar (12) according to any of the preceding claims, **characterized in that** it is manufactured from a metal or alloy, such as steel, stainless steel or aluminium or a composite material.

10. Pillar (12) according to any of the preceding claims, **characterized in that** it is manufactured by bending, stretch bending or hydroforming.

11. Pillar (12) according to any of the preceding claims, **characterized in that** said at least one region of reduced material thickness (26) is formed by water cutting, milling or laser cutting.

12. Pillar (12) according to any of the preceding claims, **characterized in that** it has a length of 1-2 metres and comprises three buckling initiators (26) located in the upper half (18) of the pillar (12) when mounted in a vehicle (10).

13. Pillar (12) according to any of claims 5-12, **characterized in that** said at least one opening (26) is arranged to allow light to be transmitted through the pillar and/or is oriented so that, when the pillar (12) is mounted in a vehicle (10), a user (28) of the vehicle (10) can have a clear line of sight through the pillar (12).

14. Pillar (12) according to claim 13, **characterized in that** it comprises an at least partly transparent element (30), such as glass or plastic, which is arranged to at least partly cover said at least one opening (26).

15. Pillar (12) according to any of the preceding claims, **characterized in that** it comprises at least one energy absorbing member (38) attached to the interior surface (40) thereof.

16. Vehicle (10) **characterized in that** it comprises a pillar (12) according to any of claims 1-15.

## Patentansprüche

1. Eine Säule (12) für ein Kraftfahrzeug (10), in dem die Säule (12) zwischen einem unteren Karosserieabschnitt des Kraftfahrzeugs (10) und einem Dach eines Kraftfahrzeugs (10) angeordnet ist, welche einen Bereich von verringerter Materialstärke (26) umfasst, **dadurch gekennzeichnet, dass** dieser Bereich von verringerter Materialstärke (26) eine Sollknickstelle darstellt, so dass, wenn die Säule (12) einer Kraft (22) unterworfen wird, etwa einer Kraft beim Überschlag in einer Aufprallsituation, die Säule (12) anfangs um die Sollknickstelle (26) herum ausknickt.

2. Säule (12) nach Anspruch 1, **dadurch gekennzeichnet, dass** sie eine Mehrzahl an Bereichen von verringerter Materialstärke (26) umfasst, die eine Mehrzahl an Sollknickstellen (26) darstellen, wodurch die Säule (12) nacheinander um jede Sollknickstelle (26) knickt; zum Beispiel vom obersten Bereich verringerter Materialstärke zum untersten.

3. Saule (12) nach Anspruch 1 oder 2, **dadurch gekennzeichnet, dass** sie eine obere und eine untere Hälfte (20) hat, wenn sie in ein Fahrzeug (10) montiert ist, wodurch dieser wenigstens eine Bereich von verringerter Materialstärke (26) in der oberen Hälfte (18) der Säule (12) oder in sowohl der oberen als auch der unteren Hälfte der Säule (12) angeordnet ist.

4. Säule (12) nach einem der vorhergehenden Ansprüche, **dadurch gekennzeichnet, dass** mindestens einer der Bereiche von verringerter Materialstärke (26) eine Öffnung ist.

5. Säule (12) nach Anspruch 4, **dadurch gekennzeichnet, dass** sie eine innere Oberfläche (40) hat, die dem Inneren des Fahrgastraumes zugewandt ist, wenn sie in ein Fahrzeug (10) montiert ist, und dass sie eine äußere Oberfläche (42) hat, die dem Äußeren des Fahrgastraumes zugewandt ist, wenn sie in ein Fahrzeug (10) montiert ist, und dass sich die wenigstens eine Öffnung von der inneren Oberfläche (40) zur äußeren Oberfläche (42) der Säule (12) erstreckt.

6. Säule (12) nach einem der vorhergehenden Ansprüche, **dadurch gekennzeichnet, dass** sie einen im wesentlichen hohlen Körper, etwa ein Rohr, von jedem beliebigen, im wesentlichen geschlossenen, gleichmäßigen oder ungleichmäßigen Querschnitt, etwa einem kreisförmigen oder vieleckigem Querschnitt, umfasst.

7. Säule (12) nach einem der vorhergehenden Ansprüche, **dadurch gekennzeichnet, dass** sie die A-Säule, B-Säule, C-Säule usw. eines Fahrzeugs (10) bildet.

8. Säule (12) nach einem der vorhergehenden Ansprüche, **dadurch gekennzeichnet, dass** wenigstens einer der Bereiche von verringerter Materialstärke (26) im wesentlichen dreieckig ist.

9. Säule (12) nach einem der vorhergehenden Ansprüche, **dadurch gekennzeichnet, dass** sie aus einem Metall oder einer Legierung, wie Stahl, rostfreiem Stahl oder Aluminium oder einem Verbundwerkstoff hergestellt ist.

10. Säule (12) nach einem der vorhergehenden Ansprüche, **dadurch gekennzeichnet, dass** sie durch Biegen, Streck-Biegen oder Hydroformen gefertigt ist.

11. Säule (12) nach einem der vorhergehenden Ansprüche, **dadurch gekennzeichnet, dass** wenigstens einer der Bereiche von verringerter Materialstärke (26) durch Wasserstrahlschneiden, Fräsen oder Laserstrahlschneiden gebildet wird.

12. Säule (12) nach einem der vorhergehenden Ansprüche, **dadurch gekennzeichnet, dass** sie eine Länge von 1 bis 2 Metern hat und drei Sollknickstellen (26) umfasst, die in der oberen Hälfte (18) der Säule (12) angeordnet sind, wenn sie in ein Fahrzeug (10) montiert ist.

13. Säule (12) nach einem der Ansprüche 5 bis 12, **dadurch gekennzeichnet, dass** die mindestens eine Öffnung (26) so gestaltet ist, dass sie den Durchlass von Licht durch die Säule zulässt und/oder so ausgerichtet ist, dass, wenn die Säule (12) in ein Fahrzeug (10) montiert ist, ein Nutzer (28) des Fahrzeugs (10) einen freien Durchblick durch die Säule (12) haben kann.

14. Säule (12) nach Anspruch 13, **dadurch gekennzeichnet, dass** sie ein zumindest teilweise durchsichtiges Element (30), wie Glas oder Kunststoff, umfasst, welches derart angeordnet ist, dass es zumindest teilweise die mindestens eine Öffnung (26) bedeckt.

15. Säule (12) nach einem der vorhergehenden Ansprüche, **dadurch gekennzeichnet, dass** sie mindestens ein energieabsorbierendes Bauteil (38) umfasst, welches an der inneren Oberfläche (40) derselben befestigt ist.

16. Ein Kraftfahrzeug (10), **dadurch gekennzeichnet, dass** es eine Säule (12) nach einem der Ansprüche 1 bis 15 umfasst.

## Revendications

1. Pilier (12) pour un véhicule (10), dans lequel le pilier (12) est disposé entre une partie de carrosserie inférieure du véhicule et un toit d'un véhicule (10), qui comprend une région d'épaisseur réduite de matériau (26), **caractérisé en ce que** ladite région d'épaisseur réduite de matériau (26) constitue un initiateur de flambage de sorte que lorsque le pilier (12) est soumis à une force (22), telle qu'une force de retournement en cas d'accident, ledit pilier (12) se flambe initialement autour dudit initiateur de flambage (26).

2. Pilier (12) selon la revendication 1, **caractérisé en ce qu'**il comprend une pluralité de régions d'épaisseur réduite de matériau (26) constituant une pluralité d'initiateurs de flambage (26), moyennant quoi ledit pilier (12) se flambe autour de chaque initiateur de flambage (26) de façon séquentielle ; par exemple, de la région la plus haute d'épaisseur réduite de matériau à la région la plus basse.

3. Pilier (12) selon la revendication 1 ou 2, **caractérisé en ce qu'**il possède une moitié supérieure et une moitié inférieure (20) lorsqu'il est monté dans un véhicule (10), moyennant quoi ladite au moins une région d'épaisseur réduite de matériau (26) se trouve dans la moitié supérieure (18) du pilier (12) ou à la fois dans la moitié supérieure et dans la moitié inférieure du pilier (12).

4. Pilier (12) selon l'une quelconque des revendications précédentes, **caractérisé en ce que** ladite au moins une région d'épaisseur réduite de matériau (26) est une ouverture.

5. Pilier (12) selon la revendication 4, **caractérisé en ce qu'**il comporte une surface intérieure (40) orientée vers l'intérieur de l'habitacle lorsqu'il est monté dans un véhicule (10) et une surface extérieure (42) orientée vers l'extérieur de l'habitacle lorsqu'il est monté dans un véhicule (10) et **en ce que** ladite au moins une ouverture s'étend de la surface intérieure (40) à la surface extérieure (40) du pilier (12).

6. Pilier (12) selon l'une quelconque des revendications précédentes, **caractérisé en ce qu'**il comprend un corps sensiblement creux, tel qu'un conduit, d'une quelconque section sensiblement fermée, uniforme ou non uniforme, telle qu'une section circulaire ou polygonale.

7. Pilier (12) selon l'une quelconque des revendications précédentes, **caractérisé en ce qu'**il constitue le pilier A, le pilier B, le pilier C, et ainsi de suite, d'un véhicule (10).

8. Pilier (12) selon l'une quelconque des revendications précédentes, **caractérisé en ce que** ladite au moins une région d'épaisseur réduite de matériau (26) est sensiblement triangulaire.

9. Pilier (12) selon l'une quelconque des revendications précédentes, **caractérisé en ce qu'**il est fabriqué à partir d'un métal ou d'un alliage, tel que l'acier, l'acier inoxydable ou l'aluminium, ou d'un matériau composite.

10. Pilier (12) selon l'une quelconque des revendications précédentes, **caractérisé en ce qu'**il est fabriqué par flexion, par formage par étirement ou par hydroformage.

11. Pilier (12) selon l'une quelconque des revendications précédentes, **caractérisé en ce que** ladite au moins une région d'épaisseur réduite de matériau (26) est formée par découpe au jet d'eau, par fraisage ou par découpe laser.

12. Pilier (12) selon l'une quelconque des revendications précédentes, **caractérisé en ce qu'**il a une longueur de 1 à 2 mètres et comprend trois initiateurs de flambage (26) situés dans la moitié supérieure (18) du pilier (12) lorsqu'il est monté dans un véhicule (10).

13. Pilier (12) selon l'une quelconque des revendications 5 à 12, **caractérisé en ce que** ladite au moins une ouverture (26) est agencée pour permettre la transmission de la lumière à travers le pilier et/ou est orientée de telle sorte que lorsque le pilier (12) est monté dans un véhicule (10), un utilisateur (28) du véhicule (10) bénéficie d'une bonne visibilité à travers le pilier (12).

14. Pilier (12) selon la revendication 13, **caractérisé en ce qu'**il comprend un élément au moins en partie transparent (30), par exemple en verre ou en plastique, qui est agencé pour couvrir au moins en partie ladite au moins une ouverture (26).

15. Pilier (12) selon l'une quelconque des revendications précédentes, **caractérisé en ce qu'**il comprend au moins un élément amortisseur (38) fixé à la surface intérieure (40) de celui-ci.

16. Véhicule (10) **caractérisé en ce qu'**il comprend un pilier (12) selon l'une quelconque des revendications 1 à 15.
